# EUROPEAN PATENT APPLICATION

(11) **EP 3 453 929 A1**
(43) Date of publication of application: **13.03.2019**
(21) Application number: 17795473.2
(22) Date of filing: 03.05.2017
(51) Int. Cl.: F16K 1/00

(54) **EXPANSION SWITCH VALVE**

(30) Priority: 10.05.2016 CN 201610305624; 10.05.2016 CN 201620419014 U
(71) Applicant: BYD Company Limited, Shenzhen, Guangdong 518118 (CN)
(72) Inventor: HUANG, Jian, Shenzhen Guangdong 518118 (CN); CHEN, Xuefeng, Shenzhen Guangdong 518118 (CN); YE, Meijiao, Shenzhen Guangdong 518118 (CN)
(74) Representative: Hoffmann Eitle
(86) International application number: PCT/CN2017/082946
(87) International publication number: WO 2017/193855

(57) **Abstract**

This disclosure discloses an expansion switch valve, including a valve body (500), where an inlet (501), an outlet (502), and an internal passage in communication between the inlet and the outlet are formed on the valve body, a first valve plug (503) and a second valve plug (504) are mounted on the internal passage, the first valve plug (503) makes the inlet and the outlet in direct communication or out of communication, and the second valve plug (504) makes the inlet and the outlet in communication through a throttle port (505) or out of communication. In this way, an opening/closure control function and/or a throttle expansion control function for a refrigerant can be implemented by integrally mounting the first valve plug and the second valve plug on the internal passage of the same valve body. A structure is simple, and production and installation are easy. In addition, when the expansion switch valve provided in this disclosure is applied to a heat pump system, pipeline connections are simplified, costs are reduced, a filling amount of refrigerant of the entire heat pump system is reduced, and oil return of a compressor is facilitated.

## Description

### BACKGROUND

### Technical Field

This disclosure relates to the field of control valves, and specifically, to an expansion switch valve.

### Related Art

In a heat pump system, sometimes, it is needed to control a refrigerant to be throttled and depressurized or to pass without being throttled, but existing electronic expansion valves can only control a refrigerant to be throttled or to not pass. To satisfy such a requirement of the heat pump system, a structure of connecting an electronic expansion valve and an electromagnetic switch valve in parallel needs to be used in the prior art. Two three-way joints and six pipelines need to be used in such a structure. Consequently, the structure is complex, and installation is inconvenient. When the electromagnetic valve is closed, and the electronic expansion valve is used, there is a moderate-temperature high-pressure liquid refrigerant at an inlet of the electronic expansion valve, and there is a low-temperature low-pressure liquid refrigerant at an outlet of the electronic expansion valve. Because the pipelines are in communication, statuses of refrigerants at an inlet and an outlet of the electromagnetic valve are also respectively the same as those at the inlet and the outlet of the electronic expansion valve. If pressures and temperatures of the refrigerants at the inlet and the outlet of the electromagnetic valve are different, it would be easy to cause damage to an internal structure of the electromagnetic valve. In addition, because of a relatively large quantity of pipelines, a filling amount of refrigerant of the entire heat pump system is increased, and costs are increased. When the heat pump system works at a low temperature, oil return of a compressor would be difficult, and such a complex structure is also disadvantageous to oil return of the heat pump system.

### SUMMARY

This disclosure provides an expansion switch valve, and the expansion switch valve is capable of implementing two functions, that is, opening/closure control and throttle control, on a medium that flows through the expansion switch valve, and has a simple structure.

To achieve the foregoing objective, this disclosure provides an expansion switch valve, including a valve body, where an inlet, an outlet, and an internal passage in communication between the inlet and the outlet are formed on the valve body, a first valve plug and a second valve plug are mounted on the internal passage, the first valve plug makes the inlet and the outlet in direct communication or out of communication, and the second valve plug makes the inlet and the outlet in communication through a throttle port or out of communication.

According to an embodiment of this disclosure, the internal passage includes a first passage and a second passage that are separately in communication with the inlet, a first valve port fitting the first valve plug is formed on the first passage, the throttle port is formed on the second passage to form a second valve port fitting the second valve plug, and the first passage and the second passage converge downstream of the second valve port and are in communication with the outlet.

According to an embodiment of this disclosure, the second passage and the outlet are provided toward a same direction, the first passage forms a first through hole perpendicular to the second passage, the inlet is in communication with the second passage through a second through hole provided in a sidewall of the second passage, and the first through hole is in communication with the second through hole and the inlet separately.

According to an embodiment of this disclosure, the inlet and the outlet are provided on the valve body perpendicularly to each other.

According to an embodiment of this disclosure, the first valve plug is disposed coaxially with the first valve port along a moving direction, to selectively plug up or detach from the first valve port.

According to an embodiment of this disclosure, the second valve plug is disposed coaxially with the second valve port along a moving direction, to selectively plug up or detach from the second valve port.

According to an embodiment of this disclosure, the first valve plug includes a first valve stem and a first plug connected to an end portion of the first valve stem, and the first plug is used for pressing against an end face of the first valve in a sealing manner, to plug up the first passage.

According to an embodiment of this disclosure, the second valve plug includes a second valve stem, an end portion of the second valve stem forms a conical head structure, and the second valve port forms a conical hole structure fitting the conical head structure.

According to an embodiment of this disclosure, the valve body includes a valve base that forms the internal passage and a first valve housing and a second valve housing mounted on the valve base, a first electromagnetic drive portion used for driving the first valve plug is mounted inside the first valve housing, a second electromagnetic drive portion used for driving the second valve plug is mounted inside the second valve housing, the first valve plug extends from the first valve housing to the internal passage inside the valve base, the second valve plug extends from the second valve housing to the internal passage inside the valve base.

According to an embodiment of this disclosure, the valve base is formed as a polyhedral structure, the first valve housing, and the second valve housing, the inlet, and the outlet are separately disposed on different surfaces of the polyhedral structure, where the first valve housing and the second valve housing are mounted in directions that are perpendicular to each other, and opening directions of the inlet and the outlet are perpendicular to each other.

By means of the foregoing technical solutions, an opening/closure control function and/or a throttle expansion control function can be implemented on a refrigerant by mounting the first valve plug and the second valve plug on the internal passage of the same valve body. A structure is simple, and production and installation are easy. In addition, when the expansion switch valve provided in this disclosure is applied to a heat pump system, pipeline connections are simplified, costs are reduced, a filling amount of refrigerant of the entire heat pump system is reduced, and oil return of a compressor is facilitated.

Other features and advantages of this disclosure are described in detail in the Detailed Description part below.

### BRIEF DESCRIPTION OF THE DRAWINGS

Accompanying drawings are used to provide further understanding on this disclosure, constitute a part of this specification, and are used, together with the following specific implementations, to explain this disclosure, but do not constitute limitations to this disclosure, wherein:
FIG. 1 is a schematic top structural view of an expansion switch valve according to a preferred implementation of this disclosure;
FIG. 2 is a schematic sectional structural view along a midline AB-AB in FIG. 1, where a first valve port and a second valve port are both in an open state;
FIG. 3 is a schematic front structural view of an expansion switch valve from a perspective according to a preferred implementation of this disclosure;
FIG. 4 is a schematic sectional structural view along a midline AB-AB in FIG. 1, where a first valve port is in an open state, and a second valve port is in a closed state;
FIG. 5 is a schematic sectional structural view along a midline AB-AB in FIG. 1, where a first valve port is in a closed state, and a second valve port is in an open state;
FIG. 6 is a schematic front structural view of an expansion switch valve from another perspective according to a preferred implementation of this disclosure;
FIG. 7 is a schematic sectional structural view along a midline AC-AC in FIG. 6, where a first valve port is in an open state, and a second valve port is in a closed state;
FIG. 8 is a first schematic internal structural diagram of an expansion switch valve according to a preferred implementation of this disclosure, where a first valve port and a second valve port are both in an open state;
FIG. 9 is a partial enlarged diagram of a part A in FIG. 8;
FIG. 10 is a second schematic internal structural diagram of an expansion switch valve according to a preferred implementation of this disclosure, where a first valve port is in an open state, and a second valve port is in a closed state; and
FIG. 11 is a third schematic internal structural diagram of an expansion switch valve according to a preferred implementation of this disclosure, where a first valve port is in a closed state, and a second valve port is in an open state.

### Description of the reference signs

500: Valve body; 501: Inlet; 502: Outlet;
503: First valve plug; 513: First valve stem; 523: First plug;
504: Second valve plug; 514: Second valve stem; 505: Throttle port;
506: First passage; 516: First valve port; 526: First through hole;
507: Second passage; 517: Second valve port; 527: Second through hole;
510: Valve base; 511: First valve housing; 521: First electromagnetic drive portion;
512: Second valve housing; and 522: Second electromagnetic drive portion.

### DETAILED DESCRIPTION

Specific implementations of this disclosure are described in detail below with reference to the accompanying drawings. It should be understood that the specific implementations described herein are merely used to describe and explain this disclosure rather than limit this disclosure.

In this disclosure, unless contrarily described, the used locality terms, such as "up, down, left, and right", are usually relative to graphical directions of the accompanying drawings. "Upstream and downstream" are relative to a flowing direction of a medium such as a refrigerant. Specifically, being in a direction the same as a flowing direction of the refrigerant is being downstream, and being in a direction opposite to the flowing direction of the refrigerant is being upstream. "Inside and outside" indicate being inside and outside a contour of a component.

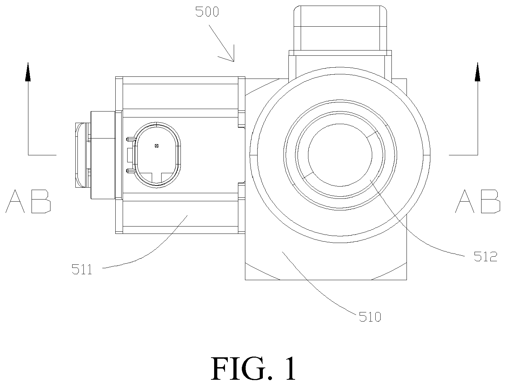

As shown in FIG. 1, an expansion switch valve provided in this disclosure includes a valve body 500, where an inlet 501, an outlet 502, and an internal passage in communication between the inlet 501 and the outlet 502 are formed on the valve body 500, a first valve plug 503 and a second valve plug 504 are mounted on the internal passage, the first valve plug 503 makes the inlet 501 and the outlet 502 in direct communication or out of communication, and the second valve plug 504 makes the inlet 501 and the outlet 502 in communication through a throttle port 505 or out of communication.

The "direct communication" implemented by the first valve plug means that the refrigerant entered from the inlet 501 of the valve body 500 can bypass the first valve plug and directly flow to the outlet 502 of the valve body 500 through the internal passage without being affected, and the "out of communication" implemented by the first valve plug means that the refrigerant entered from the inlet 501 of the valve body 500 cannot bypass the first valve plug and cannot flow to the outlet 502 of the valve body 500 through the internal passage. The "communication through a throttle port" implemented by the second valve plug means that the refrigerant entered from the inlet 501 of the valve body 500 can bypass the second valve plug and flow to the outlet 502 of the valve body 500 after being throttled by a throttle port, and the "out of communication" implemented by the second valve plug means that the refrigerant entered from the inlet 501 of the valve body 500 cannot bypass the second valve plug and cannot flow to the outlet 502 of the valve body 500 through the throttle port 505.

In this way, the expansion switch valve in this disclosure can achieve at least three states of the refrigerant entered from the inlet 501 by controlling the first valve plug and the second valve plug: (1) a closed state; (2) a direct communication state by bypassing the first valve plug 503; and (3) a throttled communication manner by bypassing the second valve plug 504.

After being throttled by the throttle port 505, a high-temperature high-pressure liquid refrigerant may become a low-temperature low-pressure atomized liquid refrigerant. This creates a condition for evaporation of the refrigerant. That is, a cross sectional area of the throttle port 505 is smaller than a cross sectional area of the outlet 502, and an opening degree of the throttle port 505 may be adjusted by controlling the second valve plug, to control an amount of flow passing through the throttle port 505, thereby avoiding insufficient refrigeration caused by an excessively small amount of refrigerant and avoiding a liquid slugging phenomenon in the compressor that is caused by an excessively large amount of refrigerant. That is, cooperation between the second valve plug 504 and the valve body 500 can make the expansion switch valve have the expansion valve function.

In this way, an opening/closure control function and/or a throttle control function of the inlet 501 and the outlet 502 can be implemented by mounting the first valve plug 503 and the second valve plug 504 on the internal passage of the same valve body 500. A structure is simple, and production and installation are easy. In addition, when the expansion switch valve provided in this disclosure is applied to a heat pump system, a filling amount of refrigerant of the entire heat pump system is reduced, costs are reduced, pipeline connections are simplified, and oil return of the heat pump system is facilitated.

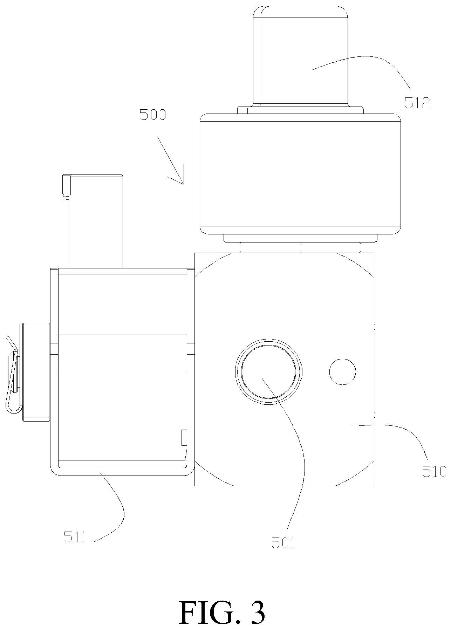

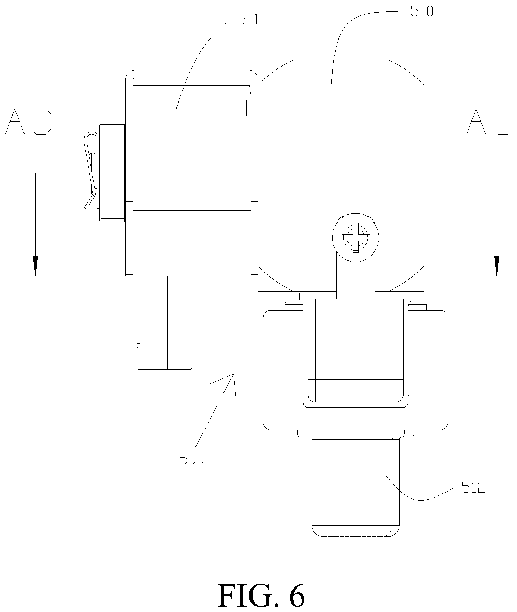

As an exemplary internal installation structure of the valve body 500, as shown in FIG. 1 to FIG. 6, the valve body 500 includes a valve base 510 that forms an internal passage and a first valve housing 511 and a second valve housing 512 that are mounted on the valve base 510. A first electromagnetic drive portion 521 used for driving the first valve plug 503 is mounted in the first valve housing 511, and a second electromagnetic drive portion 522 used for driving the second valve plug 504 is mounted in the second valve plug 504. The first valve plug 503 extends from the valve housing 511 to the internal passage inside the valve base 510, and the second valve plug 504 extends from an end proximal to the second valve housing 512 to the internal passage inside the valve base 510.

A location of the first valve plug 503 can be easily controlled by controlling power-on or power-off of the first electromagnetic drive portion 521 (for example, an electromagnetic coil), to control direct-communication or out-of-communication between the inlet 501 and the outlet 502. A location of the second valve plug 504 can be easily controlled by controlling power-on or power-off of the second electromagnetic drive portion 522 (for example, an electromagnetic coil), to control whether the inlet 501 and the outlet 502 are in communication with the throttle port 505. In other words, an electronic expansion valve and an electromagnetic valve that share the inlet 501 and the outlet 502 are connected in parallel and mounted in the valve body 500. Therefore, automated control on opening/closure and/or throttling of the expansion switch valve can be implemented, and pipeline arrangement can be simplified.

To fully use spatial locations of the expansion switch valve in different directions and avoid connections between the expansion switch valve and different pipelines from interfering with each other, the valve base 510 is of a polyhedral structure, the first valve housing 511, the second valve housing 512, the inlet 501, and the outlet 502 are respectively disposed on different surfaces of the polyhedral structure, installation directions of the first valve housing 511 and the second valve housing 512 are perpendicular to each other, and opening directions of the inlet 501 and the outlet 502 are perpendicular to each other. In this way, inlet and outlet pipelines can be connected to the different surfaces of the polyhedral structure, thereby avoiding a problem of disordered and twisted pipeline arrangement.

As a typical internal structure of the electromagnetic expansion valve, as shown in FIG. 1 to FIG. 4, the internal passage includes a first passage 506 and a second passage 507 that are separately in communication with the inlet 501, a first valve port 516 fitting the first valve plug 503 is formed on the first passage 506, the throttle port 505 is formed on the second passage 507 to form a second valve port 517 fitting the second valve plug 504, and the first passage 506 and the second passage 507 converge downstream of the second valve port 517 and are in communication with the outlet 502.

That is, the first valve port 516 is closed or opened by changing the location of the first valve plug 503, to control closure or opening of the first passage 506 in communication between the inlet 501 and the outlet 502, thereby implementing the opening or closure function of the electromagnetic valve described above. Similarly, the second valve port 517 is open or closed by changing the location of the second valve plug 504, thereby implementing the throttle function of the electronic expansion valve.

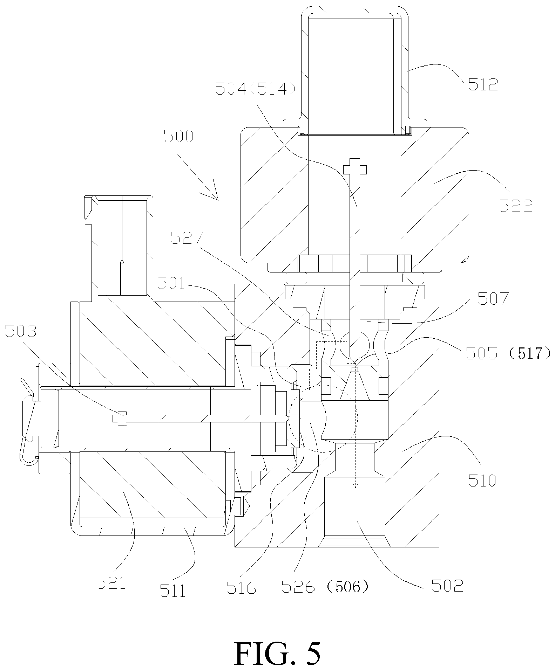

The first passage 506 and the second passage 507 can be respectively in communication with the inlet 501 and the outlet 502 in any suitable arrangement manner. To reduce an overall occupied space of the valve body 500, as shown in FIG. 5, the second passage 507 and the outlet 502 are provided toward a same direction, the first passage 506 is formed as a first through hole 526 perpendicular to the second passage 507, the inlet 501 is in communication with the second passage 507 through a second through hole 527 provided on a sidewall of the second passage 507, and the first through hole 526 and the second through hole 527 are respectively in communication with the inlet 501. The first through hole 526 and the second through hole 527 are spatially disposed perpendicularly to each other or in parallel to each other. This is not limited in this disclosure, and belongs to the protection scope of this disclosure.

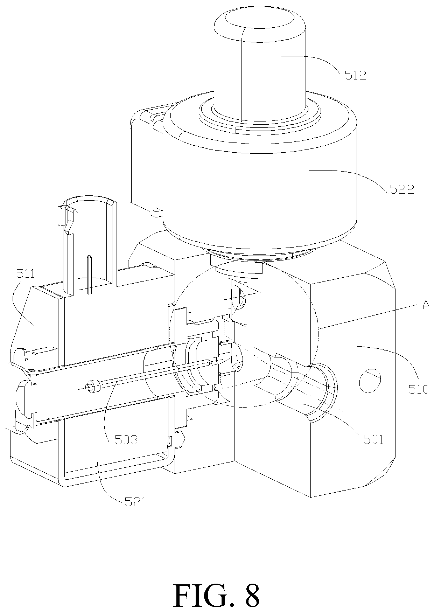

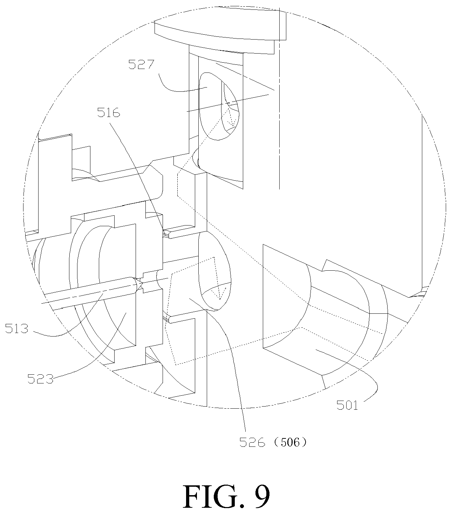

To further reduce the overall occupied space of the valve body 500, as shown in FIG. 8 to FIG. 11, the inlet 501 and the outlet 502 are provided on the valve body 500 perpendicularly to each other. In this way, as shown in FIG. 8 to FIG. 10, every two of an axis of the inlet 501, an axis of the outlet 502 (that is, an axis of the second passage 507), and an axis of the first passage 506 are set perpendicularly to each other, to avoid interference caused by movements of the first valve plug 503 and the second valve plug 504, and maximize utilization of an inner space of the valve body 500.

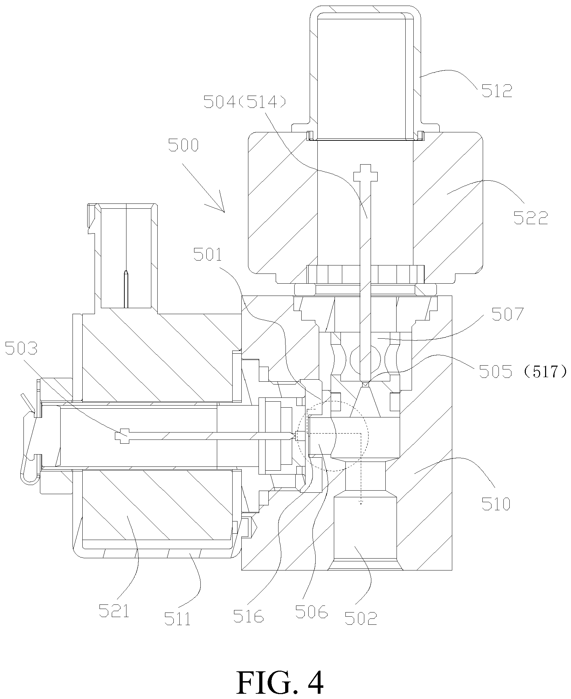

As shown in FIG. 4 and FIG. 5, to easily close and open the first valve port 516, the first valve plug 503 is disposed coaxially with the first valve port 516 along a moving direction, to selectively plug up or detach from the first valve port 516.

To easily close and open the second valve port 517, the second valve plug 504 is disposed coaxially with the second valve port 517 along a moving direction, to selectively plug up or detach from the second valve port 517.

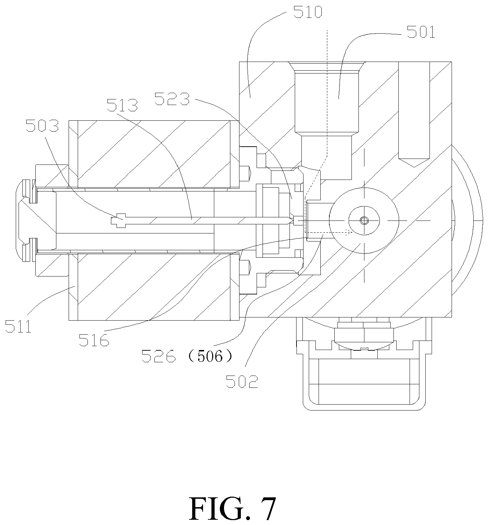

As shown in FIG. 7, to ensure reliability of plugging up the first passage 506 by using the first valve plug 503, the first valve plug 503 may include a first valve stem 513 and a first plug 523 connected to an end portion of the first valve stem 513, and the first plug 523 is used for pressing against an end face of the first valve port 516 in a sealing manner to plug up the first passage 506.

To easily adjust the opening degree of the throttle port 505 of the expansion switch valve, as shown in FIG. 4 and FIG. 5, the second valve plug 504 includes a second valve stem 514, an end portion of the second valve stem 514 is formed as a conical head structure, and the second valve port 517 is formed as a conical hole structure fitting the conical head structure.

The opening degree of the throttle port 505 of the expansion switch valve may be adjusted by moving the second valve plug 504 upward and downward, and the upward and downward moving of the second valve plug 504 may be adjusted by using the second electromagnetic drive portion 522. If the opening degree of the throttle port 505 of the expansion switch valve is zero, as shown in FIG. 4, the second valve plug 504 is located at a lowest location, the second valve plug 504 plugs up the second valve port 517, and none of the refrigerant can pass through the throttle port 505, that is, the second valve port 517. If the throttle port 505 of the expansion switch valve has an opening degree, as shown in FIG. 5, there is a gap between the conical head structure of the end portion of the second valve plug 504 and the throttle port 505, and the refrigerant flows to the outlet 502 after being throttled. If the opening degree of the throttle port 505 of the expansion switch valve needs to be increased, the second electromagnetic drive portion 522 may be controlled to move the second valve plug 504 upward, to make the conical head structure depart from the throttle port 505, so that the opening degree of the throttle port 505 is increased. In contrast, when the opening degree of the throttle port 505 of the expansion switch valve needs to be decreased, the second valve plug 504 may be driven to move downward.

During use, when only the electromagnetic valve function of the expansion switch valve needs to be used, as shown in FIG. 4, FIG. 7, and FIG. 10, the first valve plug 503 detaches from the first valve port 516, the first valve port 516 is in an open state, the second valve plug 504 is located at a lowest location, and the second valve plug 504 plugs up the throttle port 505, so that the refrigerant that flows from the inlet 501 to the internal passage cannot pass through the throttle port 505, and can only flow into the outlet 502 through the first valve port 516 and the first through hole 526 in sequence. When the electromagnetic valve is powered off, the first valve plug 503 moves leftward, and the first plug 523 is separated from the first valve port 516, so that the refrigerant may pass through the first through hole 526. When the electromagnetic valve is powered on, the first valve plug 503 moves rightward, and the first plug 523 is in close contact with the first valve port 516, so that the refrigerant cannot pass through the first through hole 526.

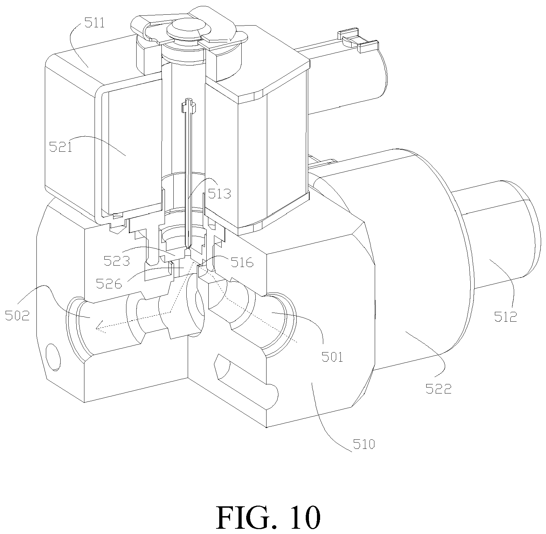

It should be noted that in FIG. 4 and FIG. 10, a dashed line with an arrow indicates a flowing route and a direction of the refrigerant when the electromagnetic valve function is used.

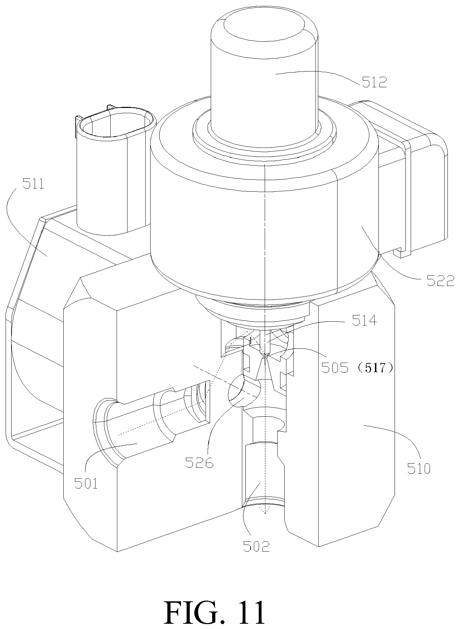

When only the electronic expansion valve function of the expansion switch valve needs to be used, as shown in FIG. 5 and FIG. 11, the second valve port 517, that is, the throttle port 505, is in an open state, and the first valve plug 503 plugs up the first valve port 516, so that the refrigerant that flows from the inlet 501 to the internal passage cannot pass through the first through hole 526, and can only flows to the outlet 502 through the second through hole 527 and the throttle port 505 in sequence, and the opening degree of the throttle port 505 can be adjusted by moving the second valve plug 504 upward and downward.

It should be noted that in FIG. 5 and FIG. 11, a dashed line with an arrow indicates a flowing route and a direction of the refrigerant when the electronic expansion valve function is used.

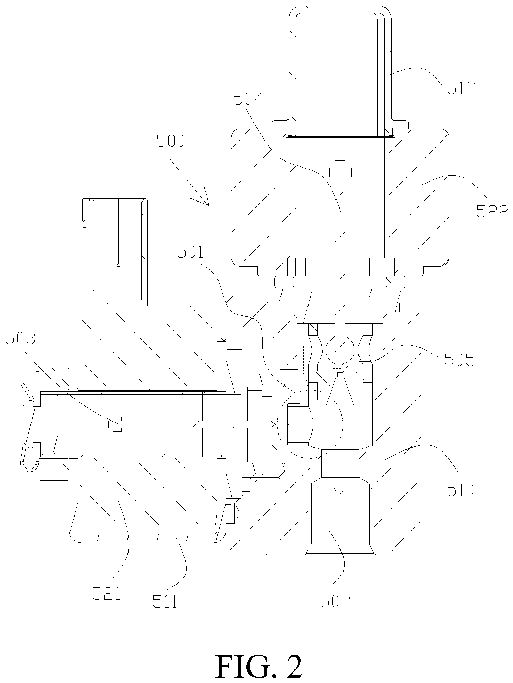

When both the electromagnetic valve function and the electronic expansion valve function of the expansion switch valve need to be used, as shown in FIG. 2, FIG. 8, and FIG. 9, a dashed line with an arrow indicates a flowing route and a direction of the refrigerant, the first valve plug 503 detaches from the first valve port 516, the first valve port 516 is in an open state, and the throttle port 505 is in an open state, so that the refrigerant that flows to the internal passage may flow to the outlet 502 separately through the first passage 506 and the second passage 507. Therefore, the expansion switch valve has both the electromagnetic valve function and the electronic expansion valve function.

Although preferred implementations of this disclosure are described in detail above with reference to the accompanying drawings, this disclosure is not limited to specific details in the foregoing implementations. Various simple variations can be made to the technical solutions of this disclosure within the scope of the technical idea of the present invention, and such simple variations all fall within the protection scope of this disclosure.

It should be further noted that the specific technical features described in the foregoing specific implementations can be combined in any appropriate manner provided that no conflict occurs. To avoid unnecessary repetition, various possible combination manners will not be described in the present invention.

In addition, various different implementations of this disclosure may alternatively be combined randomly. Such combinations should also be considered as the content disclosed in this disclosure provided that these combinations do not depart from the concept of this disclosure.

## Claims

1. An expansion switch valve, comprising a valve body (500), wherein an inlet (501), an outlet (502), and an internal passage in communication between the inlet (501) and the outlet (502) are formed on the valve body (500), a first valve plug (503) and a second valve plug (504) are mounted on the internal passage, the first valve plug (503) makes the inlet (501) and the outlet (502) in direct communication or out of communication, and the second valve plug (504) makes the inlet (501) and the outlet (502) in communication through a throttle port (505) or out of communication.

2. The expansion switch valve according to claim 1, wherein the internal passage comprises a first passage (506) and a second passage (507) that are separately in communication with the inlet (501), a first valve port (516) fitting the first valve plug (503) is formed on the first passage (506), the throttle port (505) is formed on the second passage (507) to form a second valve port (517) fitting the second valve plug (504), and the first passage (506) and the second passage (507) converge downstream of the second valve port (517) and are in communication with the outlet (502).

3. The expansion switch valve according to claim 2, wherein the second passage (507) and the outlet (502) are provided in a same direction, the first passage (506) forms a first through hole (526) perpendicular to the second passage (507), the inlet (501) is in communication with the second passage (507) through a second through hole (527) provided in a sidewall of the second passage (507), and the first through hole (526) is in communication with the second through hole (527) and the inlet (501) separately.

4. The expansion switch valve according to any of claims 1 to 3, wherein the inlet (501) and the outlet (502) are provided on the valve body (500) perpendicularly to each other.

5. The expansion switch valve according to claim 2 or 3, wherein the first valve plug (503) is disposed coaxially with the first valve port (516) along a moving direction, to selectively plug up or detach from the first valve port (516).

6. The expansion switch valve according to claim 2 or 3, wherein the second valve plug (504) is disposed coaxially with the second valve port (517) along a moving direction, to selectively plug up or detach from the second valve port (517).

7. The expansion switch valve according to claim 5, wherein the first valve plug (503) comprises a first valve stem (513) and a first plug (523) connected to an end portion of the first valve stem (513), and the first plug (523) is used for pressing against an end face of the first valve (516) in a sealing manner, to plug up the first passage (506).

8. The expansion switch valve according to claim 6, wherein the second valve plug (504) comprises a second valve stem (514), an end portion of the second valve stem (514) forms a conical head structure, and the second valve port (517) forms a conical hole structure fitting the conical head structure.

9. An expansion switch valve according to claim 1, wherein the valve body (500) comprises a valve base (510) that forms the internal passage and a first valve housing (511) and a second valve housing (512) mounted on the valve base (510), a first electromagnetic drive portion (521) used for driving the first valve plug (503) is mounted inside the first valve housing (511), a second electromagnetic drive portion (522) used for driving the second valve plug (504) is mounted inside the second valve housing (512), the first valve plug (503) extends from the first valve housing (511) to the internal passage inside the valve base (510), and the second valve plug (504) extends from the end proximal to the second valve housing (512) to the internal passage inside the valve base (510).

10. The expansion switch valve according to claim 9, wherein the valve base (510) is formed as a polyhedral structure, the first valve housing (511), the second valve housing (512), the inlet (501), and the outlet (502) are separately disposed on different surfaces of the polyhedral structure, wherein installation directions of the first valve housing (511) and the second valve housing (512) are perpendicular to each other, and opening directions of the inlet (501) and the outlet (502) are perpendicular to each other.
